Europäisches Patentamt

**European Patent Office**

Office européen des brevets

(11) Publication number: **0 322 019**

**A1**

## (12) EUROPEAN PATENT APPLICATION

(21) Application number: **88202810.3**

(51) Int. Cl.⁴: **G11B 17/04**

(22) Date of filing: **08.12.88**

(30) Priority: **14.12.87 NL 8703009**

(43) Date of publication of application:
**28.06.89 Bulletin 89/26**

(84) Designated Contracting States:
**DE FR GB IT**

(71) Applicant: **N.V. Philips' Gloeilampenfabrieken**
**Groenewoudseweg 1**
**NL-5621 BA Eindhoven(NL)**

(72) Inventor: **Douwes, Marcelles Bonefatius Maria**
**c/o INT. OCTROOIBUREAU B.V. Prof.**
**Holstlaan 6**
**NL-5656 AA Eindhoven(NL)**
Inventor: **Van Rijsewijk, Cornelis Henricus**
**Maria**
**c/o INT. OCTROOIBUREAU B.V. Prof.**
**Holstlaan 6**
**NL-5656 AA Eindhoven(NL)**

(74) Representative: **Van Weele, Paul Johannes**
**Frits et al**
**INTERNATIONAAL OCTROOIBUREAU B.V.**
**Prof. Holstlaan 6**
**NL-5656 AA Eindhoven(NL)**

(54) **Apparatus for playing a rotatable disc.**

(57) An apparatus (1) comprises a disc-pressure member (46) and a deck (39) which are movable between an initial position and a loading position to clamp a disc (2) between them, which disc is accommodated in a disc cassette comprising a sleeve (4) and a shutter (13) which is latched in said sleeve by latching means (14), which shutter together with the disc (2) is retained in the apparatus by appropriate means (28), (100) after insertion of the filled cassette into the apparatus the empty sleeve being removed. During withdrawal of the empty sleeve, the shutter (13) and the deck (39) move back to respective operating positions and the disc (40) is positioned between the disc-pressure member (46) and the turntable (40).

FIG.8

## Apparatus for playing a rotatable disc.

The invention relates to an apparatus for playing a rotatable disc by means of a deck comprising a turntable, which disc is accommodated in a disc cassette comprising an external sleeve having main walls parallel to the disc, side walls, and a front opening which communicates with a disc-receiving space, comprising a shutter for closing the front opening of the sleeve, and comprising movable latching means which are movable by external means from a latched position, in which the shutter is latched inside the sleeve, and a free position, in which the shutter is movable out of the sleeve, which apparatus comprises guide means for guiding a filled disc cassette from a front side to a rear side during insertion, and release means for disengaging the shutter from the inserted disc cassette and withdrawal means for withdrawing the shutter from the sleeve and retaining the shutter and the disc in the apparatus during withdrawal of the sleeve.

An apparatus of the type defined in the opening paragraph is known, for example from United States patent Specification 4,133,540 (herewith incorporated by reference). In this known apparatus the disc cassette is inserted into the apparatus in a slightly inclined position, after which the disc with the shutter remains in the apparatus when the sleeve is withdrawn. After withdrawal of the sleeve the disc is supported by a platform which performs a pivotal movement to deposit the disc on the turntable in a horizontal position. For removing the disc the platform first positions the disc in the plane of the guide means, after which the sleeve is re-inserted into the apparatus to take up the disc and the shutter.

In particular for use in conjunction with smaller optical media, such as for example CD-ROM (CD Read Only Memory), there is a trend towards apparatuses of minimal dimensions. For example, attempts are made to provide peripheral computer equipment suitable for use with the CD-ROM system, such that the equipment has dimensions compatible with equipment using a flexible magnetic disc as a recording medium, generally referred to as floppy-disc equipment.

It is an object of the invention to provide an apparatus of the type defined in the opening paragraph, which has small dimensions, is easy to operate and lends itself for mass-production, and to this end the invention is characterized in that during insertion into the guide means the filled disc cassette, successively moves a disc-pressure member, for pressing the disc against the turntable and a deck from an initial position to a loading position, wherein a filled disc cassette or an empty sleeve may move along the guide means unobstructed by the disc-pressure member and the deck, and that during withdrawal of the empty sleeve, while the shutter and the disc are retained in the apparatus the deck moves from the loading position back to an operating position to receive the disc on the turntable, and the disc-pressure member moves back to an operational position to press the disc onto the turntable. The apparatus in accordance with the invention inventively utilizes the typical features of the cassette which is used, namely the fact that it is inserted into the apparatus in the filled condition and that subsequently the empty sleeve is to be withdrawn from the apparatus. This enables the displacements of the filled or empty sleeve inside the apparatus to be utilised for the actuation of the disc-pressure member and the deck. With a view to simplicity of design an embodiment is preferable that is characterized in that the disc-pressure member and/or the deck are loaded in the direction of the operating position by resilient means.

When the filled cassette is inserted the disc-pressure member and the deck are pressed away against a resilient force (or spring force) by the cassette itself and during the subsequent withdrawal of the empty sleeve from the apparatus the disc-pressure member and the deck return to operating positions under resilient (or spring) force, said operating positions eventually also being their initial positions. If the disc present in the apparatus is to be reinserted into the sleeve, the disc-pressure member and the deck are first moved out of the operating position against spring force by the empty sleeve, and during removal of the disc cassette, which is now filled again, from the apparatus they are returned back to their respective initial positions by spring force. In this way a very simple and reliable mechanism is obtained. The forces needed for the displacements of the disc cassette itself, the disc-pressure member and the deck can be kept within acceptable limits if a suitable construction is used. The displacements are always effected in the correct sequence.

Preferably, the apparatus in accordance with the invention is also suitable for use in a vertical position, and if desired, aboard vehicles. An embodiment of the invention which is interesting in this respect is characterized in that the apparatus comprises deck-latching means which are movable between a free position and a latching position to latch the deck in the operating position, and in that during insertion into the guide means the filled disc cassette moves the deck-latching means to the free position before the deck is moved to the loading position, so that during withdrawal of the empty sleeve after the deck has moved from the loading position to the operating position, said means return to the latching position. Since the deck-latching means have no function other than latching the deck, a resilient force (or spring force) needed for the return movement can be very small, so that this requires hardly any additional effort from the user.

A suitable embodiment of the invention, which leads to a small overall height, is characterized in that at the rear of the apparatus the deck is pivotable about a pivotal axis parallel to the plane of rotation of the disc and perpendicular to the direction of insertion of the cassette, and in that cam means which are movable by a filled cassette or an empty sleeve are provided near the guide means to obtain the pivotal movement of the deck. The cam means suitably have such a profile that a gradually varying force is obtained during the pivotal movement of the deck.

In a direction transverse to the direction of movement of the sleeve of the disc cassette the displacements of said cam means are limited by the sleeve dimensions. For simply deriving the desired displacements of the deck during from the displacement of the cam means an embodiment of the invention is of interest, which is characterized in that said cam means are arranged between the two ends of a deck-tilting arm, whose first end is pivotally connected to the apparatus and whose second end is adapted to cooperate with the deck to pivot said deck. The mechanical advantage of the lever can be selected as desired. For similar reasons another embodiment is of interest, which is characterized in that the disc-pressure member forms part of a mechanism comprising a chassis member, in that at both ends the chassis member is supported by chassis member tilting arms which are pivotally connected to the apparatus at one end so as to be pivotable about an axis parallel to the pivotal axis of the deck, and in that the chassis-member tilting arms comprise cam means which are situated near the guide means and which are movable by a filled cassette or an empty sleeve in order to pivot the chassis member. This embodiment again enables the displacements of the relevant cam means and the disc-pressure means to be adapted to one another in the desired manner.

The deck-latching means can be of very flat construction in a further embodiment of the invention, which is characterized in that said means comprise a deck-latching lever which is pivotable about a pivotal axis parallel to the axis of rotation of a disc and situated between the ends of the lever, in that at a first free end said lever is provided with cam means which are situated near the guide means and which are movable by a filled cassette or an empty sleeve for the pivotal movement between the free position and the latching position, and in that at a second free end said lever is adapted to cooperate with the deck to latch said deck in its operating position.

An embodiment of the invention will now be described in more detail, by way of example, with reference to the accompanying drawings. In the drawings:

Fig. 1 is a perspective view of an apparatus in accordance with the invention with a filled disc cassette shown at some distance from the insertion slot of the apparatus,

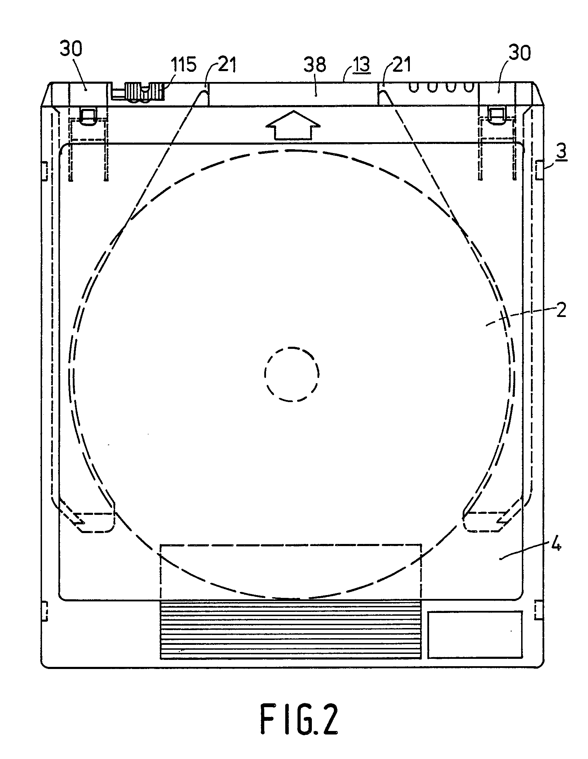

Fig. 2 is a plan view to a different scale of the disc cassette shown in Fig. 1,

Fig. 3 is a plan view of a shutter for the disc cassette of Fig. 2,

Fig. 4 shows the shutter in a sectional view taken on the line IV-IV in Fig. 3,

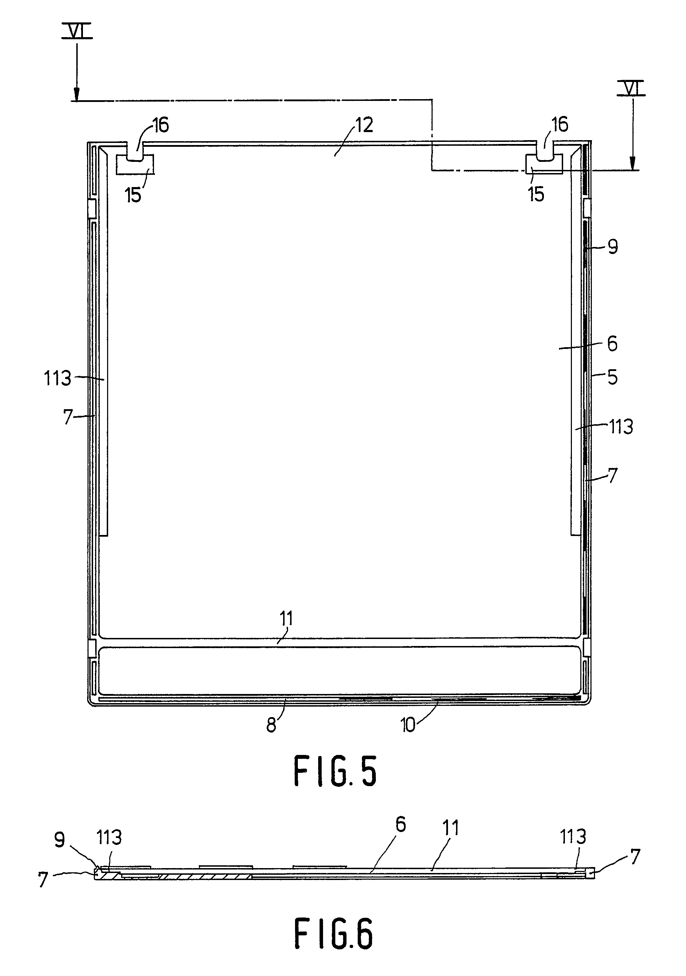

Fig. 5 is a view at the inner side of one half of the sleeve of the disc cassette shown in Fig. 2,

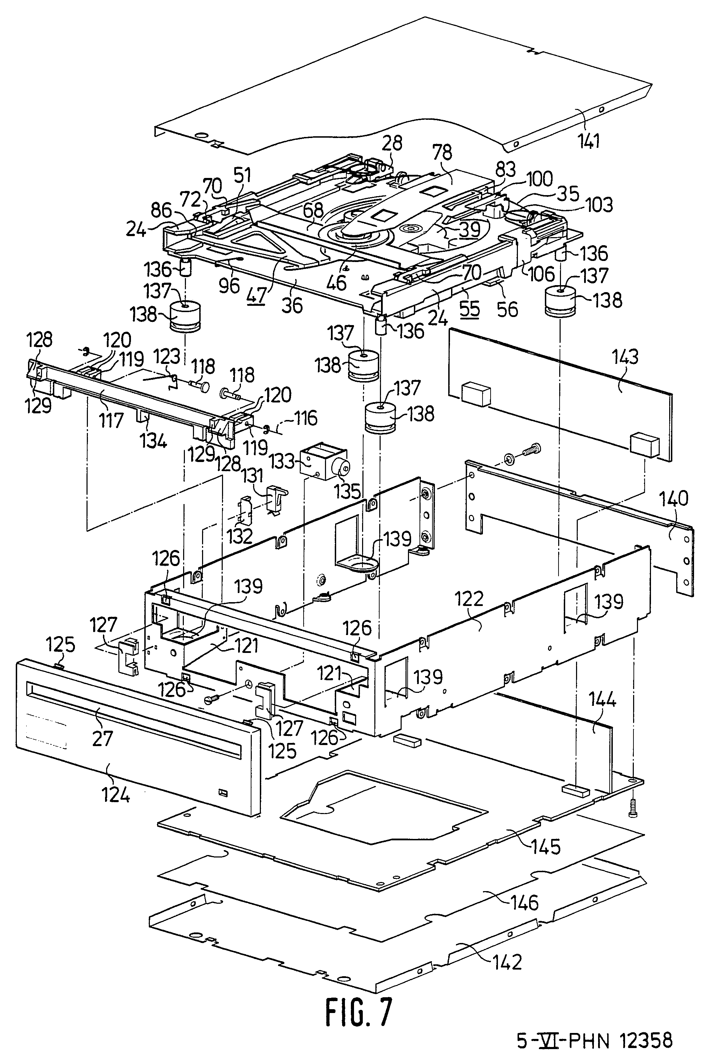

Fig. 6 shows the sleeve half partly in a sectional view taken on the line VI-VI in Fig. 5,

Fig. 7 is an exploded perspective view to a different scale of the apparatus shown in Fig. 1, and

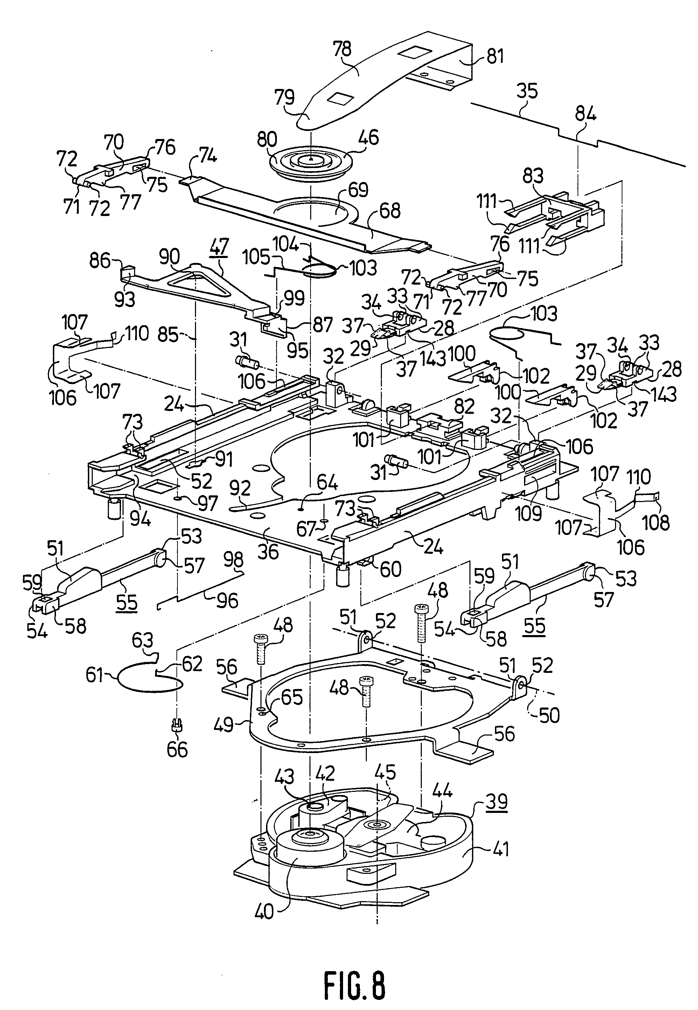

Fig. 8 is an exploded view to a different scale of the deck of the apparatus shown in Fig. 7.

The apparatus 1 is intended for playing a rotatable disc 2 used in conjunction with a disc cassette 3 with an outer sleeve 4 comprising two identical sleeve halves 5 secured to each other by ultrasonic welding. Each sleeve half has a main wall 6, which extends parallel to the disc, half side walls 7 and a half rear wall 8. One of the half side walls is formed with rebates 9 of suitable dimensions and shape in order to be fused to the material of the facing side wall of the other sleeve half. One half of the rear wall 8 is provided with similar rebates 10. At some distance from the rear wall there is partition 11 of such a height that the partitions of the two sleeve halves together forming a sleeve are contiguous with each other after ultrasonic welding. Thus, at the location where the sleeve is to be held the sleeve has a very high resistance to flexure in a direction transverse to the main walls. A front opening 12 situated opposite the rear wall 8 communicates with the disc-receiving space, which extends up to the partition 11.

The front opening of the sleeve is closed by a shutter 13. This shutter serves inter alia for closing the front opening of the sleeve and at opposite ends it comprises movable latching means 14 which are movable by external means from a latching position, in which the shutter is latched in the sleeve, and a free position, in which it is removable from the sleeve. Near the front opening 12 each of the halves 5 of the sleeve 4 has recessed portions 15 in the main wall 6 and slots 16 terminating in the recessed portions 15 to cooperate with the resilient latching means 14.

The shutter 13 is made of suitable plastics, the movable latching means comprising resilient tabs 14 which are integral with the shutter and which engage in recesses 17. At its end facing the front opening each resilient tab carries a hook 18 of a width slightly smaller than the width of the slots 16 of the sleeve. At opposite sides of the hook 18 abutments 19 are arranged to abut against the bounding surfaces of the recessed portion 15 at opposite sides of the slots 16 when the disc cassette is filled. The shutter is released by a pivotal movement of the tabs 14 into a position such that the abutments 19 are disengaged from the recesses 15.

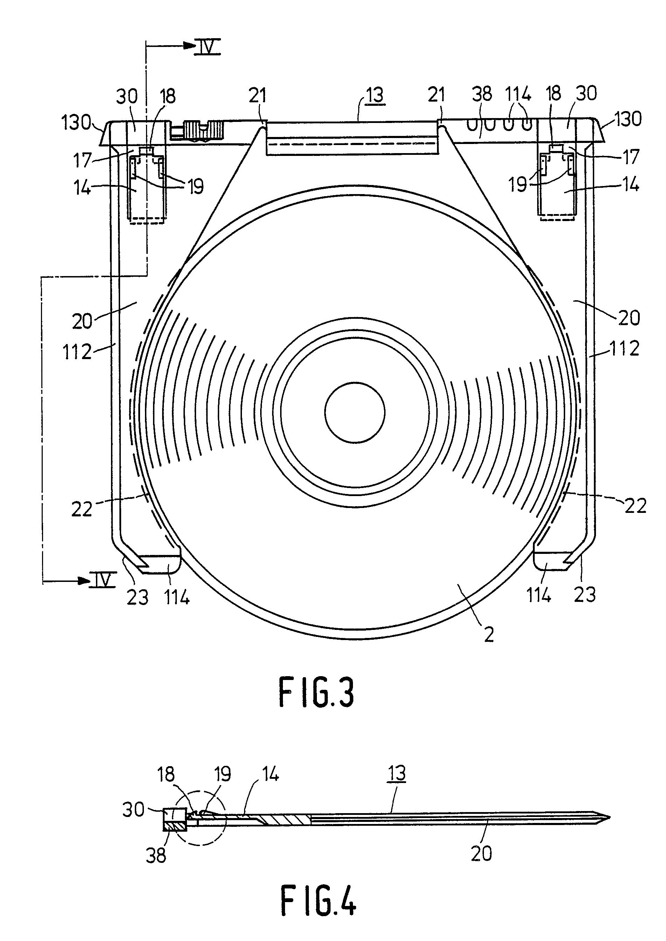

In order to hold the disc 2 the shutter 13 comprises two limbs 20. These limbs are pivotable about plastics integral hinges 21. As will be described hereinafter, the limbs 20 are pivoted slightly outwards inside the apparatus to release the disc 2 from the shutter. In Fig. 3, which illustrates how the combination of a shutter and a disc is normally situated in a filled sleeve, the disc 2 is held at opposite sides by a groove 22 in each of the limbs 20.

A suitable plastics for the shutter 13 is, for example, polypropylene because this material is very suitable for the manufacture of products comprising integral hinges. Nevertheless allowance is to be made for the fact that plastics exhibit "creep" which is the property that after prolonged elastic deformation the material is also subject to a plastics deformation. After removal of the external forces causing the elastic deformation the plastics deformation will vanish gradually. In order to ensure a correct engagement of the combination of the disc 2 and the shutter 13 in an empty sleeve, even when the limbs 20 have been in their pivoted position for a longer time, the free ends of the limbs are provided with bevelled portions 23, which are adapted to cooperate with the side walls 7 inside the sleeve, thereby causing the limbs to be returned almost completely to their normal positions in order to hold the disc 2. In this way it is assured that even after a prolonged presence of the disc in the apparatus the shutter/disc combination can always be re-inserted correctly into a sleeve.

The apparatus 1 is equipped with guide means comprising two plastics guide sections 24 of substantially U-shaped cross-section which are adapted to cooperate with the sleeve of the disc cassette at the side walls 7. A filled disc cassette can be inserted into the apparatus via an insertion slot 27 from the front 25 towards the rear 26. In order to disengage the shutter 13 of an inserted disc cassette the apparatus comprises release means in the form of two pivotable grippers 28 arranged near the rear 26 of the apparatus. Moreover, withdrawal means are provided to withdraw the shutter together with the disc from the sleeve of an inserted disc cassette and to retain the disc and shutter inside the apparatus during withdrawal of the sleeve. These withdrawal means are constituted by the central hook-shaped portions 29 of the grippers 28.

For its cooperation with the grippers 28 the shutter 13 of the disc cassette has a channel-shaped recess 30 which is situated at the front in the front portion 38 and in line with the resilient tabs 14. The width of these recesses is slightly larger than that of the grippers 28. The grippers 28 are arranged in such a position in the apparatus that they are situated exactly at the location of the recesses 30 of an inserted disc cassette. Each of the grippers 28 is journalled on a support 32 by means of a pin 31. Each gripper comprises two limbs 33 situated at opposite sides of the support 32 and formed with bores 34 for the passage of the pin 31. A wire spring 35 engages a slot 143 and urges the grippers 28 upwards.

The guide profiles 24 and the supports 32 are made of a plasticss and together with further parts they are injection-moulded on a flat sheet steel deck plate 36 by means of an outsert-moulding process. The wire spring 35 urges the grippers 28 upwards so that the hook-shaped portions 29 are urged away from the deck plate 36. At opposite sides of the hook-shaped portions 29 the grippers 28 comprise inclined portions 37.

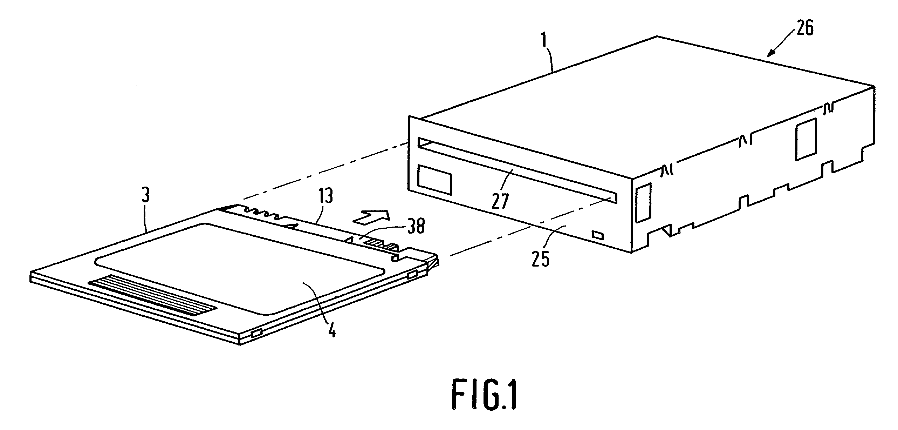

Fig. 1 shows the correct positions for insertion of a filled disc cassette. The two recesses 30 are situated at the underside of the shutter 13, which is inserted into the insertion slot 27 in such a way that the front portion 38 which projects from the sleeve 4 faces said slot. The bar-shaped front portion has a thickness which is substantially equal to that of the sleeve. When the filled disc cassette is inserted the hooks 18 on the tabs 14 will abut against the grippers 28 in the recesses and will be pivoted by cooperation with the hook-shaped portions 29. The ends of the grippers 28 then penetrate between the main wall 6 of the sleeve and the resilient tabs 14, which are consequently deflected. The grippers 28 penetrate the sleeve over such a distance that at a given instant the hook-shaped portions 29 of the grippers engage behind the hooks 18 of the resilient tabs 14. The inclined portions 37 of each gripper are situated between the abutments 19 of the tabs 14 and at opposite sides of the hook 14. When the tabs 14 have thus been deflected in such a way that the abutments 19 no longer latch the shutter 13 in the sleeve, the shutter 13 together with the disc 2 will be pulled out of the sleeve as this sleeve is withdrawn and will remain inside the apparatus as a result of the cooperation of the hook-shaped portions 29 of the grippers 28 with the hooks 18 of the resilient tabs 14.

For the rotary drive of the disc 2 the apparatus comprises a deck 39 with a turntable 40. This deck is a deck which is known per se and which is frequently used in Compact-Disc equipment. The embodiment of the invention described herein is a CD-ROM apparatus, the disc 2 being an optically readable disc having of the same size as a CD audio record and permanently provided with digital information. The apparatus described herein is intended as a computer peripheral. The deck comprises a metal frame 41 which supports the turntable 40 and which also carries a motor, not shown, for driving the turntable 40. The deck also carries an optical pick-up head 42 comprising an objective lens 43. The optical head is mounted on a pivotal arm 44, which is pivotable through a limited range about a pivotal axis 45 to follow the tracks on the disc 2. For the purpose of focussing the objective lens 43 is movable parallel to the pivotal axis 45. The deck 39 constitutes a complete mechanical-optical unit for playing the optical disc 2 and merely has to be connected to the electrical section of the apparatus via the appropriate electrical connections.

When a filled disc cassette is introduced into the guide sections 24 a disc-pressure member 46 for pressing the disc 2 against the turntable 40 is moved against resilient force from an initial position to a loading position. Subsequently the deck 39 is moved against resilient force from an initial position to a loading position. During withdrawal of the empty sleeve 4, the shutter 13 and the disc 2 being retained in the apparatus, the deck 39 returns from the loading position to an operating position to receive the disc on the turntable 40 and subsequently returns the disc-pressure member 46 to an operational position to press the disc 2 onto the turntable 40. Moreover, deck-latching means 47 are provided which are movable between a free position and a latching position to latch the deck 39 in its operating position. As it is inserted into the guide sections 24 the filled disc cassette moves the deck-latching means 47 to the free position against spring force before the deck is moved to the loading position, so that during withdrawal of the empty sleeve, after the movement of the deck from the loading position to the operating position, the deck-latching means return to the latching position under spring force and thereby latch the deck in its operating position.

The deck 39 is secured to a sheet-steel pivotal member 49 by means of screws 48. At the rear of the apparatus this member is mounted on the deck plate 36 so as to be pivotable about a pivotal axis 50. For this purpose the pivotal member comprises two lugs 51 formed with bores 52 and the deck plate 36 is provided with moulded-on plastics supports (not shown) resembling the supports 32 of the grippers 28. Bearing pins (not shown) are provided which resemble the pins 31 of the grippers 28.

For pivoting the pivotal member 49 and hence the deck 39 cam means 51 are provided, which cam means extend through the deck plate 36 into the guide sections 24 via rectangular apertures 52. Said cam means are situated between the two ends 53 and 54 of a deck tilting arm 55, which at its first end 54 is pivotally connected to the apparatus and at its second end 53 can transmit pressure to the pivotal member 49. For this purpose the pivotal member comprises two laterally projecting tabs 56.

The deck tilting arm 55 comprises a sheet-steel strip which is provided with the cam surface 51, with a pressure portion 57 on the first end 53 and with a hinge lug 58 on the second end 54 by injection-moulding from a plastics. Said hinge lug is formed with a hole 59 through which a hook-shaped projection 60 formed on the underside of the guide section 24 can be passed. This enables the deck tilting arms 55 to be mounted very rapidly and simply.

The deck 39 and the pivotal member 49 are urged towards the deck plate 36 by a wire spring 61 having bent end portions 62 and 63. The end portion 62 is inserted through an opening 64 in the deck plate. The end portion 63 is fitted from the underside into an indenture 65 of the pivotal member 49. The wire spring 61 is secured to the underside of the deck plate 36 by a plastics fixing element 66 which is inserted through an opening 67 in the deck plate, thereby clamping the wire spring 61 in position. When the deck tilting arms 55 are pivoted the pressure portions 57 exert pressure on the tabs 56 of the pivotal member 49, which pressure is transmitted to the wire spring 61 via the end portion 63, thus causing the deck 39 to be pivoted under spring force.

The disc-pressure member 46 forms part of a mechanism comprising a chassis member 68 formed with an opening 69 in which the disc-pressure member 46 is arranged with clearance. At each of its ends the chassis member is supported by chassis-member tilting arms 70. At their ends 71 these arms are pivotally connected to the apparatus, so as to be pivotable about an axis parallel to the pivotal axis 50 of the deck. The chassis-member tilting arms 70 are wholly made of a plastics and at their ends 71 they carry pivot pins 72 which can be snapped underneath hooks 73 formed on the upper side of the guide section 24. The chassis member 78 is made of sheet steel and comprises tabs 74 at both ends, which tabs are engageable in correspondingly shaped slots 75 near the front 76 of the chassis-member tilting arms 70. Between both ends 71 and 76 the chassis-member tilting arms comprise projections 77 which engage in guide sections 24 for cooperation with a filled cassette or an empty sleeve to pivot the chassis member 68.

For loading the disc-pressure member 46 and, in the loading position, the chassis member 68 resiliently, a spring member 78 made of a leaf-spring material is provided. This member has a free end 79 which acts on the centre of the disc-pressure member 46. The disc-pressure member 46 has a flanged edge 80 with which the pressure exerted by the spring member 78 can be transmitted to the chassis member 68. In the operational position the chassis member 68 is in such a position that the disc-pressure member 46, as it exerts pressure on the disc, is clear of the chassis member 68. At its end facing the end 79 the spring member 78 has a U-shaped portion 81 by which it can be mounted mounting block 82 formed on the deck plate 36 and a disc-alignment element 83 mounted on this block. This alignment element is slid onto the mounting block from the front towards the rear and is secured thereto by means of the central portion 84 of the wire spring 35. The function of the disc-alignment element 83 will be described in more detail hereinafter.

The deck 39 is latched in the operating position by deck-latching means 47 constructed as a deck-latching lever. This lever is pivotable about a pivotal axis 85 which extends perpendicularly to the path defined by the guide sections 24 and is situated between the ends 86 and 87. For this purpose the lever carries a pivot 90 having one end of rectangular cross-section corresponding to the shape of an opening 91 in the deck plate 36. By inserting the pivot 90 into the opening 91 and subsequently tilting it slightly the lever is pivotally connected to the deck plate 86 in a simple manner. The deck plate has an arcuate slot 92 to permit the passage of that portion of the lever 47 which is situated near the end 87 to the underside of the deck plate.

A projection 93 near the first end 86 engages a recess 94 in the guide section 24. When a filled disc cassette or an empty sleeve is inserted pressure is exerted on the projection 93, causing the lever 47 to be pivoted. At the end 87 a flat portion 95 is provided which engages underneath the pivotal member 49 in the latched position of the lever and thereby latches the deck in its operating position. A pivotal movement causes the flat portion to become disengaged from underneath the pivotal member 49, so that latching ceases. The pivotal movement is performed against the resilient force of a wire spring 96. This wire spring is inserted through an opening 97 in the deck plate 36 and at the end 98 it is fitted in a slot 99 in the lever 47, causing said lever to be constantly urged towards the latching position.

At the rear of the deck plate 36 two hooks 100 are pivotally mounted on supports 101. The wire spring 35 engages in slits 102 in the hooks 100, thereby tilting said hooks forwards. When a disc holder and disc are present the hooks 100 engage behind the front portion 38 of the shutter 13. This ensures that when an empty sleeve is inserted into the apparatus the cooperation of the empty sleeve with the abutments 19 on the resilient tabs 14 cannot interrupt the cooperation of the hooks 18 of the shutter with the hook-shaped portion 29 of the grippers 28 before the shutter 13 is latched in the sleeve, so that the shutter and the disc would be loose inside the apparatus and yet the empty sleeve would be withdrawn.

The two springs 103 are important for the correct operation of the combination of a disc cassette and the apparatus. The hook-shaped limbs 104 and 105 of these springs are inserted through corresponding slots 106 in the upper sides of the guide sections 24. When a filled disc cassette is inserted the front portion 38 of the shutter 13 of the disc cassette abuts against the limbs 105 of the springs 103 at each side. As the cassette is pushed home the springs 103 are tensioned. In the situation in which the shutter 13 is held in the apparatus by the grippers 28 and the hooks 100, the front portion 38 is loaded by the springs 103. As soon as the shutter 13 is released again and can move freely the springs 103 will move the shutter resiliently forwards. These steps guarantee a reliable and correct latching of the shutter in the sleeve independently of the speed with which the empty sleeve is inserted.

The spring members 106, which have not yet been mentioned in the foregoing, serve to move the limbs 20 of the shutter 13 slightly apart to release the disc 2 on the turntable. The spring members are clamped onto the guide sections 24 by clamping portions 107. They comprise a leaf spring 108 which extends through a slot 109 in the guide section. A projection 110 of each leaf spring 108 acts on a side 130 of the front portion 38 of the shutter 13. Since the centre of the front portion 38 bears against the mounting block 82 on the deck plate 36 the force exerted on the sides 130 of the shutter by the projections 110 of the leaf springs 108 produce a torque on each side of the shutter, causing the shutter limbs 22 to be pivoted slightly about the integral hinges 21. Thus, the disc 2 is released for rotation. The pivotal movement of the shutter limbs is limited in that. their free ends abut against the guide sections 24.

There are some other steps which are important in order to ensure a correct engagement of the shutter 13 and the disc 2 in the sleeve 4. For example, the disc-alignment element 83 is provided with a plurality of disc stops 111 which normally are not in contact with the disc and do not obstruct the rotation of the disc 2 on the turntable 40 of the deck 39. These stops have been provided merely to prevent the disc 2 from being tilted inadvertently through an angle which is too large for a correct re-engagement in an empty sleeve. On opposite sides of the limbs 20 the shutter 13 has narrow ridges 112 which are engageable in corresponding slots between guides 113 on the main walls 6 of the sleeve halves 5. The ends 114 of the shutter limbs 20 are slightly pointed to assist in locating the shutter 13 correctly in an empty sleeve.

The front of the front portion 38 of the shutter 13 may be formed with a plurality of recesses 114 to provide coding elements which can be sensed by suitable means in the apparatus. The coding may relate to the type of disc inside the cassette, the type of information on the disc etc. Moreover, an element 115 which is movable between two positions may be provided at the front, which element can be employed, for example, as an anti-erase element in the case of an erasable disc.

The apparatus is equipped with a very simple means to avoid mis-insertion of the cassette. This means comprises a flap 117 which is pivotable about an axis 116. This flap not only serves to prevent mis-insertion of a cassette but it also serves for closing the larger part of the insertion slot 27 of the apparatus. Pivot pins 118 extend through holes 119 in arms 120 at the rear of the flap 117. By means of the pivot pins 118 the flap is pivotally connected to supports 121 of the sheet-steel chassis 122 of the cabinet of the apparatus. A spring 123 urges the flap 117 towards its closed position, in which it closes the insertion slot 27. This slot is formed in a plastics front panel 124 which is snapped into openings 126 at the front of the chassis 122 by means of moulded-on hooks 125. Brackets 127 are secured to the chassis 122 at opposite ends of the slot 27.

At its front the flap 117 comprises inclined projections 128 directly adjoined by transverse stops 129. If the disc cassette is inserted into the slot 27 in such a way that the recesses 30 in the shutter 13 are situated at the underside the transverse stops 129 engage in the recesses 30 in the front portion 38 of the shutter 13 and the flap 117 is pressed open against the force of the spring 123 by the cooperation of the shutter portions situated nearer the ends 130 of the front portion 138 with the inclined projections 128, so that the filled disc cassette can be inserted without being obstructed. An empty sleeve can also be inserted readily because the transverse stops 129 engage the slots 16 in the sleeve. Since both sleeve halves 6 of the cassette are formed with identical slots 16 it does not matter which side of the sleeve faces upwards when an empty sleeve is being inserted. The flap 117 will always be opened. However, if a filled disc cassette is inserted into the apparatus in a position in which the recesses 30 in the front portion 13 are situated at the top, the transverse stops 129 will abut against the front portion 38 and thereby inhibit insertion of the disc cassette into the apparatus. Also when it is attempted to insert a filled disc cassette or an empty sleeve into the insertion slot with the rear wall 8 of the sleeve at the front, the transverse stops 129 will inhibit entry.

By means of a switch 131, mounted on a support 132, it is possible to detect electrically whether the flap is in the closed position. An electromagnet 133, which is controlled electrically for example by computer, prevents the flap 117 from being opened. For this purpose the flap comprises a stop 134 at its lower side, which stop is adapted to cooperate with a movable actuator 135 of the electromagnet 133.

On its underside the deck plate 36 carries a plurality of moulded-on plastics pins 136 which engage in openings 137 in elastic blocks 138. The blocks 138 are mounted on supports 139 which are bent out of the sheet material of the chassis 122. In this way the deck plate 36 and all the parts arranged on the deck plate are supported elastically in the chassis 122.

The cabinet of the apparatus 1 is completed by a metal rear panel 140, a metal upper panel 141 and a metal bottom plate 142. The appropriate electronic components are mounted on printed circuit boards 143 to 146.

Although only one embodiment of the invention has been described with reference to the drawings, this does not mean that entirely different embodiments are not possible within the scope of the invention. The invention is based on the recognition of the fact that in the case of a cassette of the type for which after insertion of a filled cassette into an apparatus an empty sleeve must be removed before the disc can be played and an empty sleeve must be re-inserted to remove the disc from the apparatus as a filled disc cassette, it is possible to use a mechanism in which parts of the apparatus which cooperate directly with the disc, i.e. mainly the deck and the disc-pressure member, can always be controlled in the correct sequence by the movements of the disc cassette or the empty sleeve. It is possible to arrange the deck and the disc-pressure member movably in the apparatus and to load these components towards one another by elastic means. The insertion movement of the filled disc cassette is used for pressing the said components away from one another, springs ensuring that during withdrawal of the empty sleeve these components are moved towards one another, thereby clamping and positioning the disc. During subsequent re-insertion of the empty sleeve to collect the disc a similar cycle of movements is performed. The sequence of operations to be performed is always correct because the sequence of movements completely depends on the position of the cam means in the path of movement of the disc cassette or the empty sleeve. Moreover, during insertion of a disc cassette or an empty sleeve the sequence of operations is performed automatically in one direction and during withdrawal of the filled disc cassette or the empty sleeve the same sequence is performed automatically in the reverse direction.

It is possible to construct entirely different decks based on the same inventive principles. For example, for tilting the deck 39 from the operating position to the loading position other means than the pivotal arm 55 may be employed, such as translating pins or spring-loaded balls, etc. Instead of resilient means, other means could be used to move the deck and pressure member. For example, it would be possible to move these components using one or more servomotors controlled by switches operated by the disc cassette or the empty sleeve. Still another possibility would be to use motion transmitting means to transmit the insertion and retraction movements to the said components. Combinations of means could be used also. Further modifications of details of the apparatus and the cassette will be apparant to those skilled in the art on the basis of the above example and the inventive concept.

A comparison of the apparatus in accordance with the invention, as described with reference to the accompanying drawing, with prior-art constructions not discussed herein may reveal further or other advantages.

## Claims

1. An apparatus (1) for playing a rotatable disc by means of a deck (39) comprising a turntable (40), which disc is accommodated in a disc cassette (3) comprising an external sleeve (4) having main walls (6) parallel to the disc, side walls (7), and a front opening (12) which communicates with a disc-receiving space, comprising a shutter (13) for closing the front opening of the sleeve, and comprising movable latching means (14) which are movable by external means from a latched position, in which the shutter is latched inside the sleeve, and a free position, in which the shutter is movable out of the sleeve, which apparatus (1) comprises guide means (24) for guiding a filled disc cassette from a front side to a rear side during insertion, and release means (28) for disengaging the shutter from the inserted disc cassette and withdrawal means (29) for withdrawing the shutter from the sleeve and retaining the shutter and the disc in the apparatus during withdrawal of the sleeve, characterized in that during insertion into the guide means the filled disc cassette, successively moves a disc-pressure member (46), for pressing the disc (2) against the turntable (40) and a deck (39) from an initial position to a loading position, wherein a filled disc cassette or an empty sleeve may move along the guide means unobstructed by the disc-pressure member and the deck, and that during withdrawal of the empty sleeve (4), while the shutter (13) and the disc (2) are retained in the apparatus the deck (39) moves from the loading position back to an operating position to receive the disc on the turntable (40), and the disc-pressure member (46) moves back to an operational position to press the disc onto the turntable (40).

2. An apparatus as claimed in Claim 1, characterized in that the disc-pressure member and/or the deck are loaded in the direction of the operating position by resilient means.

3. An apparatus as claimed in Claim 1, characterized in that the apparatus comprises deck-latching means which are movable between a free position and a latching position to latch the deck (39) in the operating position, and in that during insertion into the guide means the filled disc cassette moves the deck-latching means (47) to the free position against resilient force before the deck is moved to the loading position, so that during withdrawal of the empty sleeve, after the deck has moved from the loading position to the operating position, said means return to the latching position under spring force.

4. An apparatus as claimed in Claim 1, characterized in that at the rear of the apparatus the deck (39) is pivotable about a pivotal axis (50) parallel to the plane of rotation of the disc and perpendicular to the direction of insertion of the cassette (3), and in that cam means (57) which are movable by a filled cassette or an empty sleeve (4) are provided near the guide means to obtain the pivotal movement of the deck (39).

5. An apparatus as claimed in Claim 4, characterized in that said cam means (51) are arranged between the two ends (53, 54) of a deck-tilting arm (55), whose first end (54) is pivotally connected to the apparatus and whose second end (53) which is adapted to cooperate with the deck (39) to pivot said deck.

6. An apparatus as claimed in Claim 1, characterized in that the disc-pressure member (46) forms part of a mechanism comprising a chassis member (68), in that at both ends the chassis member is supported by chassis-member tilting arms (70) which are pivotally connected to the apparatus at one end (71) so as to be pivotable about an axis parallel to the pivotal axis of the deck, and in that the chassis-member tilting arms comprise cam means (77) which are situated near the guide means and which are movable by a filled cassette or an empty sleeve in order to pivot the chassis member.

7. An apparatus as claimed in Claims 3 and 4, characterized in that the deck-latching means comprise a deck-latching lever (47) which is pivotable about a pivotal axis (85) parallel to the axis of rotation of the disc and situated between the ends (86, 87) of the lever, in that at a first free end (86) said lever (47) is provided with cam means (93) which are situated near the guide means and which are movable by a filled cassette or an empty sleeve for the pivotal movement between the free position and the latching position, and in that at a second free end (87) said lever is adapted to cooperate with the deck (39) to latch said deck in its operating position.

FIG.1

FIG.2

# FIG.3

# FIG.4

FIG.5

FIG.6

4-VI-PHN 12358

FIG. 7

FIG. 8

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| P,A | EP-A-0 273 510  (PHILIPS) <br> * Claims; figures * <br> --- | 1-4 | G 11 B  17/04 |
| A | GB-A-2 075 743  (R.C.A. CORP.) <br> * Abstract; page 2, line 92 - page 3, line 106; figures * <br> --- | 1,2,4,5 | |
| A | GB-A-2 075 742  (R.C.A. CORP.) <br> * Abstract; page 3, lines 9-87; figures * <br> --- | 1,2,4,5 | |
| A | GB-A-2 103 863  (TOKYO SHIBAURA) <br> * Page 4, line 53 - page 5, line 119; figures * <br> --- | 1 | |
| A | PATENT ABSTRACTS OF JAPAN, vol. 10, no. 7 (P-419)[2064], 11th January 1986; & JP-A-60 163 271 (TOSHIBA K.K.) 26-08-1985 <br> * Abstract; figures * <br> --- | 1 | |
| A | GB-A-2 152 267  (PIONEER) <br> * Abstract; figures * <br> --- | 1,2,4 | TECHNICAL FIELDS SEARCHED (Int. Cl.4) <br><br> G 11 B |
| A | EP-A-0 185 140  (TOSHIBA K.K.) <br> * Abstract; claims; figures * <br> --- | 1-4 | |
| A | GB-A-2 070 840  (NIPPON VICTOR) <br> --- | | |
| A | GB-A-2 095 019  (TOKYO SHIBAURA) <br> --- | | |
| A | GB-A-2 080 009  (TOKYO SHIBAURA) <br> --- | | |
| A | DE-A-3 607 039  (ALPS ELECTRIC) <br> --- | | |
| A | FR-A-2 374 716  (R.C.A. CORP.) & US-A-4 133 540 (Cat. D.A) <br> ----- | | |

The present search report has been drawn up for all claims

| Place of search | Date of completion of the search | Examiner |
|---|---|---|
| THE HAGUE | 10-03-1989 | DECLAT M.G. |

EPO FORM 1503 03.82 (P0401)